# FASCICULE DE BREVET EUROPEEN

(11) **EP 3 436 741 B1**
(45) Date de publication et mention de la délivrance du brevet: **05.10.2022**
(21) Numéro de dépôt: 17709149.3
(22) Date de dépôt: 13.02.2017
(51) Int. Cl.: F21V 8/00, F21S 8/00, B60Q 3/225, B60Q 3/64

(54) **DISPOSITIF D'ECLAIRAGE COMPORTANT UN BOITIER DOTE D'UN FUT DE RECEPTION POUR UN TRONÇON CYLINDRIQUE D'UN GUIDE DE LUMIERE**
BELEUCHTUNGSVORRICHTUNG MIT EINEM GEHÄUSE MIT EINEM SOCKEL ZUR AUFNAHME EINES ZYLINDRISCHEN TEILS EINES LICHTLEITERS
LIGHTING DEVICE COMPRISING A HOUSING PROVIDED WITH A SOCKET TO ACCEPT A CYLINDRICAL PORTION OF A LIGHT GUIDE

(30) Priorité: 29.03.2016 FR 1652664
(43) Date de publication de la demande: 06.02.2019
(73) Titulaire: PSA Automobiles SA, 78300 Poissy (FR)
(72) Inventeur: SCHNURIGER, Damien, 91300 Massy (FR); NORAIS, Marc, 78500 Sartrouville (FR)
(86) Numéro de dépôt international: PCT/FR2017/050325
(87) Numéro de publication internationale: WO 2017/168061

(56) Documents cités:
- EP-A1- 2 848 469
- US-A1- 2011 268 888

## Description

### Domaine de l'invention

La présente invention concerne d'une manière générale le domaine des dispositifs d'éclairage comprenant des guides de lumière.

### Arrière-plan de l'invention

Depuis une dizaine d'années, l'utilisation de dispositifs d'éclairage comprenant des guides de lumière connait une croissance exponentielle, en particulier dans les domaines de l'éclairage d'ambiance pour les véhicules automobiles.

Un tel guide de lumière constitue classiquement un élément cylindrique allongé réalisé dans un matériau transparent et à une extrémité duquel on vient disposer une source lumineuse.

Les rayons lumineux entrant par cette extrémité constituant la face d'entrée de la lumière se propagent le long de ce guide par réflexions successives sur son enveloppe cylindrique en direction de son extrémité opposée constituant la face de sortie.

La source lumineuse est habituellement implantée sur une carte à circuits imprimés de type PCB logée dans un boîtier comprenant également un fût cylindrique support apte à recevoir un tronçon d'extrémité du guide de lumière.

Ce tronçon d'extrémité présentant généralement une face extérieure cylindrique et lisse, il arrive régulièrement que cette dernière s'extrait au moins partiellement du fût du boîtier, ce qui perturbe voire empêche la propagation dans des rayons lumineux émis par la source le long du guide de lumière.

Afin de palier à cet inconvénient, il est connu de prévoir, sur l'élément porteur devant accueillir le dispositif lumineux, des aménagements spécifiques permettant d'assurer la fixation du boîtier à cet élément, ces derniers consistant par exemple à ménager un plateau spécifique de support ou à implanter des agrafes métalliques.

Ces aménagements requièrent l'ajout de composants et/ou d'étapes de montage supplémentaires pour la fabrication de ces éléments porteurs, ce qui entraine des surcoûts important et une augmentation du nombre de références (l'éclairage d'ambiance n'étant présent que sur certains modèles de véhicule haut de gamme).

Afin d'éviter ces aménagements, la demande de brevet américaine US 2009/0290375 divulgue un tel dispositif d'éclairage dont le fût de réception du boîtier présente une section transversale sensiblement carrée, tandis que le tronçon d'extrémité cylindrique du guide de lumière présente un diamètre de même taille ou légèrement plus large que la distance séparant deux parois latérales opposées de ce fût.

Une fois insérée dans ce dernier, ce tronçon d'extrémité du guide de lumière est ainsi retenu à l'intérieur de ce fût par contact frictionnel avec ses parois latérales.

Il s'avère toutefois à l'usage que cette retenue n'est pas toujours suffisante pour éviter le déplacement ou la sortie du tronçon d'extrémité du guide de lumière, notamment en cas de choc violent ou de vibrations importantes.

On connait également de la demande de brevet américaine US 2004/0052089 un tel dispositif d'éclairage dont le tronçon d'extrémité du guide de lumière présente à son extrémité libre une collerette tronconique.

Le fût de réception dont la largeur interne est inférieure au diamètre de cette collerette, présente deux pattes aptes à s'écarter élastiquement pour permettre l'insertion du tronçon d'extrémité du guide de lumière à l'intérieur du fût.

Lorsque la collerette tronconique dépasse ces deux pattes et pénètre dans une découpe tangentielle ménagée en dessous, ces dernières reprennent leur position d'origine et assurent ainsi la retenue du tronçon d'extrémité du guide de lumière dans le fût.

Toutefois à l'usage, le boîtier a tendance à pivoter autour de ce tronçon d'extrémité du guide de lumière ce qui entraine des micro-chocs répétés avec les éléments environnants pouvant occasionner des bruits parasites et/ou détériorer la source lumineuse. Un autre dispositif d'éclairage est connu du document EP 2 848 469.

### Objet et résumé de l'invention

La présente invention vise donc à éviter ce pivotement du boîtier autour du tronçon d'extrémité du guide de lumière.

Elle propose à cet effet un dispositif d'éclairage selon la revendication 1.

La présence de ces moyens d'indexation permet d'empêcher le pivotement du boîtier autour du tronçon cylindrique du guide de lumière reçu dans le fût, de sorte à éviter tout risque d'interaction entre le dispositif d'éclairage selon l'invention et les éléments environnants.

Selon des caractéristiques préférées dudit dispositif lumineux, prises seules ou en combinaison :
- chaque dite languette comprend à son extrémité libre une dent saillant du côté interne dudit fût de réception et formée par une rampe inclinée s'étendant jusqu'à un redent de retenue radial ;
- lesdits moyens élastiques de retenue comportent deux dites languettes d'encliquetage disposées à l'opposé l'une de l'autre et aptes à coopérer chacune avec un ergot correspondant ménagé sur ledit tronçon cylindrique du guide de lumière ;
- ladite source lumineuse est constituée par une diode de type électroluminescente ou laser ; et/ou
- ledit guide de lumière débouche sur une lentille de diffusion prismatique.

L'invention vise également sous un deuxième aspect, un porte-gobelet pour véhicule automobile comportant un tel dispositif lumineux.

L'invention vise enfin sous un troisième aspect, un compartiment vide-poche pour véhicule automobile comportant un tel dispositif lumineux.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 est une vue en perspective d'un porte-gobelet de véhicule automobile intégrant un dispositif d'éclairage selon un premier mode de réalisation de l'invention ;
- la figure 2 représente une vue agrandie d'une partie du dispositif d'éclairage de la figure 1 illustrant la mise en place de la portion d'extrémité du guide de lumière à l'intérieur du fût de réception du boîtier ;
- la figure 3 est une vue partielle en perspective du boîtier du dispositif d'éclairage de la figure 1 dans sa configuration assemblée après la mise en place de la portion d'extrémité du guide de lumière à l'intérieur du fût de réception ;
- la figure 4 représente une vue en perspective similaire à la figure 3 mais sur laquelle la partie située à l'avant d'un plan de coupe transversal a été arrachée pour une meilleure visibilité ;
- la figure 5 est une vue en perspective d'un compartiment vide-poche de véhicule automobile intégrant un dispositif d'éclairage selon un deuxième mode de réalisation de l'invention ;
- la figure 6 représente une vue en perspective du dispositif d'éclairage de la figure 5 dans sa configuration assemblée après mise en place du tronçon cylindrique du guide de lumière à l'intérieur du fût de réception du boîtier ; et
- la figure 7 est une vue de section transversale du dispositif d'éclairage de la figure 5 dans sa configuration de service après son montage sur le vide-poche.

### Description détaillée d'un mode préféré de réalisation

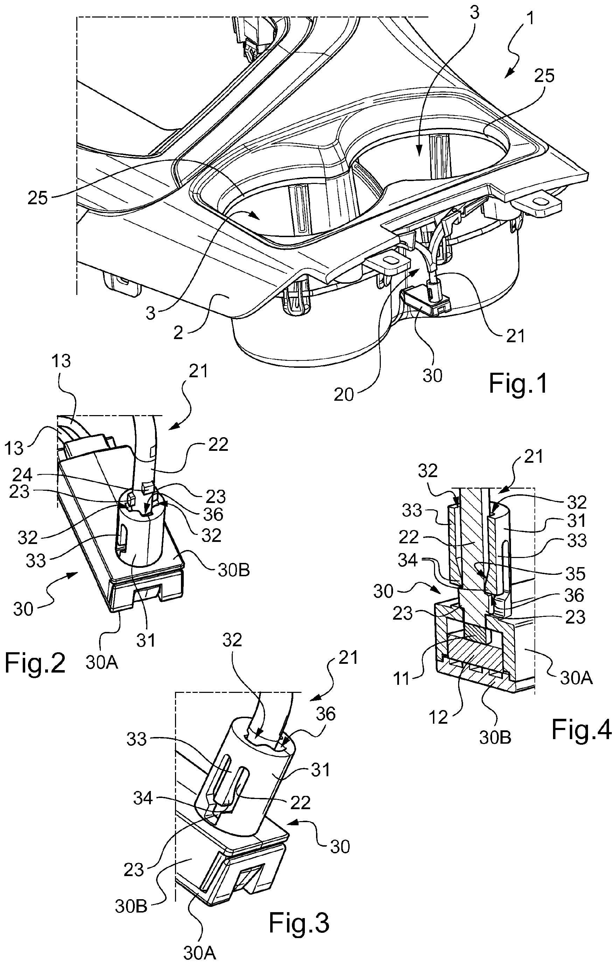

La figure 1 représente un porte-gobelet 1 pour véhicule automobile comportant un corps principal 2 en matière plastique définissant deux cavités cylindriques 3 destinées à accueillir des bouteilles ou des cannettes.

Ce porte-gobelet 1 comprend également un dispositif d'éclairage d'ambiance 10 apte à illuminer le pourtour supérieur des deux cavités 3.

Le dispositif d'éclairage 10 comporte un guide de lumière transparent 20 comprenant une partie cylindrique 21 s'étendant à proximité du corps 2 dans le plan vertical médian séparant les deux cavités 3 et se prolongeant à l'une de ses deux extrémités par deux branches 25 à section carrée s'étendant symétriquement par rapport à ce plan vertical médian le long du pourtour supérieur d'une cavité respective du corps principal 2.

Les rayons lumineux partiellement diffusés par ces deux branches 25 du guide de lumière 20 sur l'ensemble de leur longueur forment ainsi deux rubans de lumière continus illuminant les deux cavités de ce porte-gobelet 1.

Le guide de lumière 20 est réalisé de préférence d'une seule pièce par moulage à partir d'un matériau thermoplastique transparent, éventuellement teinté dans la masse tel que le polycarbonate (PC) ou le polyméthacrylate de méthyle (PMMA).

Le dispositif d'éclairage 10 comporte également une source lumineuse 11, constituée avantageusement par une diode lumineuse de type électroluminescente (LED) ou laser, et implantée sur une carte à circuits imprimés 12 (ou PCB pour « Printed Circuit Board ») logée dans un boîtier 30 constitué ici de deux parties 30A, 30B clipsées l'une sur l'autre et venues chacune de moulage à partir d'un polymère thermoplastique tel que le polyamide (PA), éventuellement chargé en fibres minérales de sorte à renforcer leur tenue mécanique.

La carte à circuits imprimés 12 est reliée au circuit électrique du véhicule (non représenté sur les figures) par l'intermédiaire de deux câbles d'alimentation 13 traversant l'une des parois du boîtier 30.

Ce boîtier 30 comporte un fût cylindrique 31 apte à recevoir le tronçon d'extrémité rectiligne 22 de la partie cylindrique 21 du guide de lumière 20 de sorte à le coupler optiquement à la diode 11 tel qu'illustré par la figure 4.

Le fût 31 qui présente un diamètre interne égal ou très légèrement supérieur à celui du tronçon d'extrémité cylindrique rectiligne 22 du guide de lumière 20, comprend deux languettes élastiques d'encliquetage 33 aptes à retenir ce tronçon 22 après son insertion.

Les languettes d'encliquetage 33 s'étendent à l'opposé l'une de l'autre le long de deux rainures de guidage 32 ménagées le long du fût 31, et sont obtenues par des découpes partielles réalisées dans la paroi cylindrique de ce fût 31.

Chaque languette 33 comprend à son extrémité distale, située à proximité du fond ouvert du fût 31, une dent 34 saillant du côté interne de ce fût 31 et formée par une rampe inclinée 35 s'étendant jusqu'à un redent de retenue radial 36.

Comme on le verra plus en détails par la suite, ces languettes 33 sont destinées à coopérer avec deux ergots parallélépipédiques longitudinaux 23 ménagés à l'opposé l'un de l'autre sur le tronçon d'extrémité cylindrique rectiligne 22 du guide de lumière 20.

Une rainure d'indexation à section rectangulaire 36 est également ménagée le long de la face interne du fût 31, cette rainure 36 étant en outre espacée angulairement de 90° vis-à-vis de chacune des deux languettes 33.

Cette rainure 36 est destinée à coopérer avec une protubérance parallélépipédique 24 de section complémentaire située sur le tronçon d'extrémité cylindrique rectiligne 22 du guide de lumière 20, au dessus des deux languettes 33 et espacée angulairement de 90° vis-à-vis de chacune des dernières.

On va maintenant décrire les opérations d'assemblage du dispositif d'éclairage 10 à l'aide des figures 2 à 4.

L'opérateur doit tout d'abord présenter le tronçon d'extrémité 22 du guide 20 en regard de l'ouverture d'entrée du fût 31 de manière à ce que les deux ergots 23 et la protubérance 24 se trouvent respectivement à l'aplomb des deux rainures de guidage 32 et de celle d'indexation 36 (figure 2).

Il insère ensuite progressivement le tronçon d'extrémité 22 à l'intérieur du fût 31 de sorte à faire pénétrer dans les deux ergots 23 dans les rainures 32 puis la protubérance 24 dans la rainure d'indexation 36, et jusqu'à ce que les deux ergots 23 viennent simultanément buter contre les rampes inclinées 35 des dents 34 des languettes 33.

La poursuite de ce mouvement d'insertion entraine le glissement des ergots 23 le long des rampes 35 et l'écartement radial vers l'extérieur des languettes élastiques 33.

Lorsque les ergots 23 dépassent les rampes 35, les languettes 33 reprennent leur position initiale de sorte que leurs redents 36 (situés désormais en regard de ces ergots 23) s'opposent au retrait du tronçon d'extrémité 22 du guide 20 (figures 3 et 4).

Dans cette configuration assemblée du dispositif d'éclairage 10, la coopération par correspondance de forme entre la protubérance 24 et la rainure d'indexation 36 permet de maintenir le tronçon cylindrique d'extrémité 22 du guide de lumière 20 et le fût de réception 31 du boîtier 30 l'un par rapport à l'autre dans une position angulaire relative prédéterminée, de sorte à empêcher ce boîtier 30 de pivoter autour de ce tronçon d'extrémité 22.

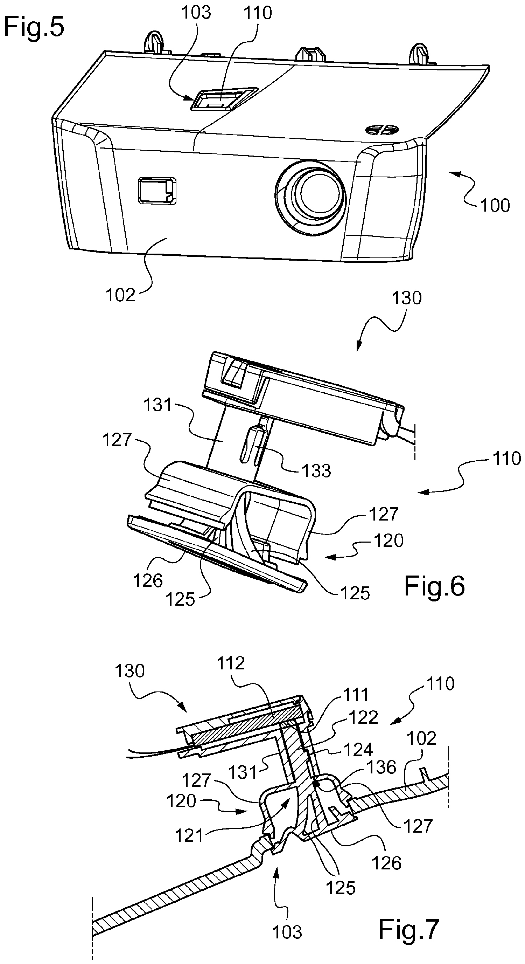

La figure 5 représente un compartiment vide-poche 100 pour véhicule automobile comportant un corps principal 102 en matière plastique ainsi qu'un dispositif d'éclairage 110 d'ambiance monté sur une ouverture 103 ménagée dans une paroi latérale de ce corps 102.

Le dispositif d'éclairage 110 comporte un dispositif lumineux transparent 120 comprenant un guide de lumière 121 doté d'un tronçon cylindrique 122 identique au tronçon 22 du dispositif 10 et se prolongeant à l'une de ses extrémités par deux nappes superposées 125 débouchant sur une lentille de diffusion prismatique 126.

Le dispositif lumineux 120, réalisé de préférence d'une seule pièce par moulage à partir d'un matériau thermoplastique transparent, éventuellement teinté dans la masse tel que le polycarbonate (PC) ou le polyméthacrylate de méthyle (PMMA), comprend également deux pattes d'attache 127 s'étendant transversalement de part et d'autre du guide 121 depuis la zone de jonction entre le tronçon cylindrique 122 et les nappes 125 afin de permettre sa fixation par clipsage sur le pourtour de l'ouverture 103 du corps 102.

Le dispositif d'éclairage 110 comporte également une source lumineuse 111, constituée avantageusement par une diode lumineuse de type électroluminescente (LED) ou laser, et implantée sur une carte à circuits imprimés 112 logée dans un boîtier 130 identique au boîtier 30 du dispositif d'éclairage 10.

Dans la configuration assemblée du dispositif d'éclairage 110 illustrée sur les figures 6 et 7, le tronçon cylindrique 122 du guide de lumière 121 est retenu dans le fût 131 du boîtier 130 par ses deux languettes élastiques 133, ce boîtier 130 étant en outre empêché de pivoter autour de ce tronçon cylindrique 122 par la coopération par correspondance de forme entre la protubérance 124 et la rainure d'indexation 136.

Selon des variantes de réalisation non représentées, certaines éléments du dispositif d'éclairage selon l'invention sont conformés autrement et/ou présentent des dimensions différentes.

D'une manière générale, on rappelle que la présente invention ne se limite pas aux formes de réalisation décrites et représentées, mais englobe toute variante d'exécution à la portée de l'homme du métier dans les limites de l'étendue des revendications.

En particulier, on notera que l'invention n'est pas limitée au secteur automobile et qu'elle peut être également mise en œuvre dans de nombreux autres domaines.

## Revendications

1. Dispositif d'éclairage comportant un guide de lumière transparent (20 ; 121), un boîtier (30 ; 130) logeant une source lumineuse (11 ; 111) et comprenant un fût de réception (31 ; 131) apte à recevoir un tronçon cylindrique (22 ; 122) dudit guide de lumière (20 ; 121) de sorte à le coupler optiquement à ladite source lumineuse (11 ; 111), ainsi que des moyens élastiques de retenue (33, 23 ; 133) dudit tronçon cylindrique (22 ; 122) du guide de lumière (20 ; 121) à l'intérieur dudit fût de réception (31 ; 131) du boîtier (30 ; 130) ; des moyens d'indexation (36, 24 ; 136, 124) aptes à maintenir ledit tronçon cylindrique (22 ; 122) du guide de lumière (20 ; 121) et ledit fût de réception (31 ; 131) du boîtier (30 ; 130) l'un par rapport à l'autre dans une position angulaire relative prédéterminée, lesdits moyens d'indexation comportant une rainure (36 ; 136) ménagée le long de la face interne dudit fût de réception (31 ; 131) et apte à coopérer avec une protubérance (24 ; 124) de section complémentaire située sur ledit tronçon cylindrique (22 ; 122) du guide de lumière (20 ; 121) **caractérisé en ce que** lesdits moyens élastiques de retenue comportent au moins une languette d'encliquetage (33 ; 133) s'étendant le long dudit fût de réception (31 ; 131) et apte à coopérer avec un ergot correspondant (23) ménagé sur ledit tronçon cylindrique (22 ; 122) du guide de lumière (20 ; 121), chaque dite languette (33 ; 133) s'étendant le long d'une rainure de guidage correspondante (32) ménagée le long dudit fût de réception ; ledit ergot (23) étant plus proche de l'extrémité libre dudit tronçon cylindrique que ladite protubérance (24).

2. Dispositif d'éclairage selon la revendication 1, **caractérisé en ce que** chaque dite languette (33 ; 133) comprend à son extrémité libre une dent (34) saillant du côté interne dudit fût de réception et formée par une rampe inclinée (35) s'étendant jusqu'à un redent de retenue radial (36).

3. Dispositif d'éclairage selon l'une des revendications 1 ou 2, **caractérisé en ce que** lesdits moyens élastiques de retenue comportent deux dites languettes d'encliquetage (33 ; 133) disposées à l'opposé l'une de l'autre et aptes à coopérer chacune avec un ergot correspondant (23) ménagé sur ledit tronçon cylindrique (22 ; 122) du guide de lumière (20 ; 121).

4. Dispositif d'éclairage selon l'une des revendications 1 à 3, **caractérisé en ce que** ladite source lumineuse est constituée par une diode (11 ; 111) de type électroluminescente ou laser.

5. Dispositif d'éclairage selon l'une des revendications 1 à 4, **caractérisé en ce que** ledit guide de lumière (121) débouche sur une lentille de diffusion prismatique (126).

6. Porte-gobelet pour véhicule automobile **caractérisé en ce qu'**il comporte un dispositif d'éclairage selon l'une des revendications 1 à 5.

7. Compartiment vide-poche pour véhicule automobile **caractérisé en ce qu'**il comporte un dispositif d'éclairage selon l'une des revendications 1 à 5.

## Patentansprüche

1. Beleuchtungsvorrichtung mit einem transparenten Lichtleiter (20; 121), einem Gehäuse (30; 130), das eine Lichtquelle (11; 111) aufnimmt und einen Aufnahmeschaft (31; 131) umfasst, der einen zylindrischen Abschnitt (22; 122) des Lichtleiters (20; 121) so aufnehmen kann, dass er optisch mit der Lichtquelle (11; 111) gekoppelt wird, sowie mit elastischen Mitteln zum Halten (33, 23; 133) des zylindrischen Abschnitts (22; 122); 122) des Lichtleiters (20; 121) im Inneren des Aufnahmeschafts (31; 131) des Gehäuses (30; 130); Indexierungsmittel (36, 24; 136, 124), die geeignet sind, den zylindrischen Abschnitt (22; 122) des Lichtleiters (20; 121) und den Aufnahmeschaft (31; 131) des Gehäuses (30; 130) in Bezug zueinander in einer vorbestimmten relativen Winkelposition zu halten, wobei die Indexierungsmittel eine Nut (36 ; 136), die entlang der Innenseite des Aufnahmeschafts (31; 131) ausgebildet und geeignet ist, mit einem Vorsprung (24; 124) mit komplementärem Querschnitt zusammenzuwirken, der sich auf dem zylindrischen Abschnitt (22; 122) des Lichtleiters (20; 121) befindet, **dadurch gekennzeichnet, dass** die elastischen Haltemittel mindestens eine Einrastlasche (33; 133) umfassen, die sich entlang des Aufnahmeschafts (31 ; 131) und geeignet ist, mit einem entsprechenden Vorsprung (23) zusammenzuwirken, der an dem zylindrischen Abschnitt (22; 122) des Lichtleiters (20; 121) ausgebildet ist, wobei sich jede dieser Zungen (33; 133) entlang einer entsprechenden Führungsnut (32) erstreckt, die entlang des Aufnahmeschafts ausgebildet ist; wobei der Vorsprung (23) näher am freien Ende des zylindrischen Abschnitts liegt als die Ausstülpung (24).

2. Beleuchtungsvorrichtung nach Anspruch 1, **dadurch gekennzeichnet, dass** jede der genannten Zungen (33; 133) an ihrem freien Ende einen Zahn (34) aufweist, der von der Innenseite des genannten Aufnahmeschafts vorsteht und durch eine schräge Rampe (35) gebildet wird, die sich bis zu einer radialen Halteverzahnung (36) erstreckt.

3. Beleuchtungsvorrichtung nach einem der Ansprüche 1 oder 2, **dadurch gekennzeichnet, dass** die elastischen Haltemittel zwei sogenannte Rastzungen (33; 133) umfassen, die einander gegenüberliegend angeordnet und geeignet sind, jeweils mit einem entsprechenden Vorsprung (23) zusammenzuwirken, der an dem zylindrischen Abschnitt (22; 122) des Lichtleiters (20; 121) ausgebildet ist.

4. Beleuchtungsvorrichtung nach einem der Ansprüche 1 bis 3, **dadurch gekennzeichnet, dass** die Lichtquelle aus einer Diode (11; 111) vom Typ Elektrolumineszenz oder Laser besteht.

5. Beleuchtungsvorrichtung nach einem der Ansprüche 1 bis 4, **dadurch gekennzeichnet, dass** der Lichtleiter (121) in eine prismatische Streulinse (126) mündet.

6. Getränkehalter für Kraftfahrzeuge, **dadurch gekennzeichnet, dass** er eine Beleuchtungsvorrichtung nach einem der Ansprüche 1 bis 5 aufweist.

7. Ablagefach für Kraftfahrzeuge, **dadurch gekennzeichnet, dass** es eine Beleuchtungsvorrichtung nach einem der Ansprüche 1 bis 5 aufweist.

## Claims

1. Lighting device comprising a transparent light guide (20; 121), a housing (30; 130) accommodating a light source (11; 111) and comprising a receiving shaft (31; 131) capable of receiving a cylindrical section (22; 122) of the said light guide (20; 121) so as to couple it optically to the said light source (11; 111), as well as elastic means (33, 23; 133) for retaining the said cylindrical section (22; 122) of the light guide (20; 121) inside the said receiving shaft (31; 131) of the housing (30; 130); indexing means (36, 24; 136, 124) capable of indexing the said cylindrical section (22 122) of the light guide (20; 121) inside said receiving shaft (31; 131) of the housing (30; 130); indexing means (36, 24; 136, 124) capable of holding said cylindrical section (22; 122) of the light guide (20; 121) and said receiving shaft (31; 131) of the housing (30; 130) in a predetermined relative angular position to each other, said indexing means comprising a groove (36; 136) provided along the length of the receiving shaft (31; 131) of the housing (30; 130); 136) formed along the inner face of said receiving shaft (31; 131) and capable of cooperating with a protuberance (24; 124) of complementary section located on said cylindrical section (22; 122) of the light guide (20; 121), **characterised in that** said elastic retaining means comprise at least one snap-in tongue (33; 133) extending along said receiving shaft (31; 131) and capable of cooperating with said protuberance (24; 124); 131) and adapted to cooperate with a corresponding lug (23) provided on said cylindrical section (22; 122) of the light guide (20; 121), each said lug (33; 133) extending along a corresponding guide groove (32) provided along said receiving shaft; said lug (23) being closer to the free end of said cylindrical section than said protrusion (24).

2. The lighting device according to claim 1, **characterized in that** each said tab (33; 133) comprises at its free end a tooth (34) projecting from the inner side of said receiving barrel and formed by an inclined ramp (35) extending to a radial retaining redent (36).

3. Lighting device according to one of claims 1 or 2, **characterized in that** said elastic retaining means comprise two said snap-in tongues (33; 133) arranged opposite each other and each able to cooperate with a corresponding lug (23) provided on said cylindrical section (22; 122) of the light guide (20; 121).

4. Lighting device according to one of claims 1 to 3, **characterised in that** said light source consists of a diode (11; 111) of the electroluminescent or laser type.

5. Lighting device according to one of claims 1 to 4, **characterised in that** said light guide (121) opens onto a prismatic diffusion lens (126).

6. Cup holder for a motor vehicle, **characterised in that** it comprises a lighting device according to one of claims 1 to 5.

7. A pocket compartment for a motor vehicle, **characterised in that** it comprises a lighting device according to one of claims 1 to 5.
